# EUROPÄISCHE PATENTANMELDUNG

(11) **EP 3 211 284 A1**
(43) Veröffentlichungstag der Anmeldung: **30.08.2017**
(21) Anmeldenummer: 17157074.0
(22) Anmeldetag: 21.02.2017
(51) Int. Cl.: F16L 55/165, B29B 17/00, E21B 7/28, E21B 7/30, E21B 10/00, F16L 55/18, E21B 10/26

(54) **VERFAHREN ZUM ENTFERNEN EINES IM ERDREICH VERLEGTEN KUNSTSTOFFROHRES WIE EIN GASROHR, EIN WASSERROHR, EIN ABWASSERROHR ODER DERGLEICHEN**

(30) Priorität: 23.02.2016 DE 102016103175
(71) Anmelder: Alteilges, Birgit, 33335 Gütersloh (DE); Büscher, Karl-Josef, 33378 Rheda-Wiedenbrück (DE)
(72) Erfinder: Alteilges, Christian, 33335 Gütersloh (DE); Büscher, Karl-Josef, 33378 Rheda-Wiedenbrück (DE)
(74) Vertreter: Flötotto, Hubert

(57) **Zusammenfassung**

Die Erfindung betrifft ein Verfahren zum Entfernen eines im Erdreich (1) verlegten Kunststoffrohres (2), wie ein Gas-, ein Wasser-, ein Abwasserrohr oder dergleichen, welches aus PVC, PE, PET Material besteht, mit einer Bohrvorrichtung (3) und einem rotierenden Bohrgestänge (4), wobei zunächst eine Startgrube (5) am Anfang und eine Zielgrube (6) am Ende der zu entfernenden Rohrlänge ausgehoben wird, und wobei dann das zu entfernende Kunststoffrohr (2) in der Startgrube (5) und in der Zielgrube (6) aufgetrennt wird. Erfindungsgemäß wird nach dem Verfahren die mit einem Hydraulikaggregat ausgestattete Bohrvorrichtung (3) für das verlängerbare Bohrgestänge (4) in der Startgrube (5) aufgestellt, und das Bohrgestänge (4) durch das zu entfernende Kunststoffrohr (2) bis in die Zielgrube (6) eingefahren bzw. geschoben, und wobei dann an das freie Ende (7) des Bohrgestänges (4) in der Zielgrube (6) ein Werkzeug (8) angesetzt wird, weiches unter Rotation des Bohrgestänges (4) und Einfahren bzw. Zurückziehen des Bohrgestänges (4) in Richtung zur Startgrube (5) das Kunststoffrohr (2) im Erdreich zerfräst bzw. zerspant.

## Beschreibung

### Technisches Umfeld

Die Erfindung betrifft ein Verfahren zum Entfernen eines im Erdreich verlegten Kunststoffrohres wie ein Gasrohr, ein Wasserrohr, ein Abwasserrohr oder dergleichen, welches z. B. aus PVC, PE, PET Material besteht, mit einer Bohrvorrichtung und einem rotierenden Bohrgestänge, wobei zunächst eine Startgrube am Anfang und eine Zielgrube am Ende der zu entfernenden Rohrlänge ausgehoben wird und wobei dann das zu entfernende Rohr in der Startgrube und in der Zielgrube aufgetrennt wird.

### Stand der Technik

Aufgrund der fortschreitenden technischen Entwicklung werden im Erdbereich verlegte Altrohre, die z. B. aus PVC, PE oder PET Material bestehen, wie Gas-, Wasser- oder Abwasserrohre stillgelegt, wobei insbesondere diese Rohre, wie gesagt, aus Kunststoffen bestehen. Diese Rohre, soweit sie nicht mehr benötigt werden, verbleiben dann in der Erde. Nur für den Fall, dass aufgrund von Straßenerweiterungen oder von Erneuerungen von Kanälen das darüber liegende Erdreich abgeräumt ist, werden diese Rohre mit geborgen. Ansonsten besteht nur die Möglichkeit, in einem aufwändigen Verfahren, Erde abzutragen oder Gräben auszuheben, um auf diese Weise die Rohre freizulegen, damit diese aus dem Erdreich herausgenommen werden können.

### Aufgabe

Der Erfindung stellt sich somit das Problem, stillgelegte Kunststoffrohrleitungen, wie beispielsweise Gasrohrleitungen, Wasserleitungen oder Abwasserrohrleitungen, deren Verwendung im Erdreich nicht mehr benötigt werden oder zulässig sind, kostengünstig im Erdreich zu entfernen und einem Recyclingprozess zuzuführen, ohne dass die Erdoberfläche abgetragen werden muss, oder ein Graben ausgehoben werden muss, was bei hochwertigen Oberflächen hohe Kosten verursacht.

### Lösung

Erfindungsgemäß wird dieses Problem mit den Merkmalen des Anspruchs 1 sowie des Anspruchs 8 gelöst. Vorteilhafte Ausgestaltungen der Erfindung ergeben sich aus den Unteransprüchen.

Bei dem erfindungsgemäßen Verfahren zum Entfernen eines im Erdreich verlegten Kunststoffrohres werden zunächst eine Startgrube und eine Zielgrube freigelegt, zwischen denen das erdverlegte Kunststoffrohr entfernt werden soll. Das zu entfernende Kunststoffrohr wird in der Startgrube und in der Zielgrube aufgetrennt. Eine Bohrvorrichtung mit Hydraulikaggregat, ersatzweise ein Horizontalbohrgerät auf Lafette für Vorschub und Rotation, wird dann auf der Grubensohle der Startgrube bzw. an der Startgrube positioniert. Gleichzeitig wird an das Bohrgerät eine Hochdruckpumpe angeschlossen, mittels der eine Flüssigkeit zur Spülung und Kühlung durch das Rohrgestänge gepumpt werden kann.

Das Bohrgestänge wird dann zunächst von der Startgrube aus durch das zu entfernende Kunststoffrohr bis zur Zielgrube geschoben bzw. eingefahren. Sollten zwischen Start- und Zielgrube allerdings Rohrwinkel oder enge Rohrbögen liegen, müssten dann auf dem zu entfernenden Kunststoffrohrabschnitt an diesen Stellen Zwischengruben d. h. Start-/Zielgruben erstellt werden. In der Zielgrube, in die dann das freie Ende des Bohrgestänges ragt, wird das Werkzeug umfassend einen Kegelstumpffräser oder Kegelstumpfschäler auf das freie Gestänge montiert.

Wenn das Kunststoffrohr nur entfernt werden soll, wird an den Kegelstumpf eine Verschlusskappe aufgeschraubt, die den Bohrgestängekanal rückwärtig verschließt. Soll beispielsweise eine Auswechselung des abgängigen Kunststoffrohres erfolgen, kann auf den Gewindestumpf des Kegelstumpfes ein Drallfänger angeschraubt werden. Wenn nun ein Drallfänger montiert ist, kann hier mit einer entsprechenden Vorrichtung ein neues Rohr oder auch eine Leitung befestigt werden, um dann mit fortschreitendem Einzug des Kegelstumpffräsers oder Kegelstumpfschälers in Richtung Startgrube eingezogen zu werden. Das neue Rohr würde auf diese Weise ohne irgendeine Verschmutzung im Inneren des Rohres eingezogen. Es entstehen keine zusätzlichen Kosten für die Reinigung.

Das Bohrgestänge wird dann unter Rotation und hydraulischem Zug Richtung Startgrube zurückgezogen. Durch die Rotation und der Zugkraft des Hydraulikaggregates oder Horizontalbohrgerätes wird das im Erdreich befindliche Kunststoffrohr zerfräst, zerspant bzw. zerschält. In Folge eines unter hohem Druck eingepumpten Spül-/Kühlmittels wird das zerfräste, zerspante oder zerschälte Kunststoffmaterial durch die noch vorhandene Rohrlänge zur Startgrube ausgespült und ausgetragen. Das zurückströmende Spül-/Kühlmittel mit den Kunststoffteilchen wird in der Startgrube mittels einer Vakuumpumpe abgesaugt. Das abgesaugte Spül-/Kühlmittel mit den darin befindlichen Kunststoffteilchen wird über eine Recyclingtrennungsanlage geführt, um das Kunststoffmaterial zu extrahieren, um es einer Wiederverwertung zuzuführen. Die Anwendung dieses Verfahrens ist sowohl in Bereichen mit einfachen sowie hauptsächlich auch mit hochwertigen Geländeoberflächen von besonderem Vorteil, wenn z. B. bei der Auswechselung von Gas- und Wasserleitungen diese im städtischen Bereich mit etlichen Hausanschlüssen versehen sind. Dann können diese Abzweigpunkte für die Hausanschlüsse gleichzeitig als Start- und Zielgruben genutzt werden.

Das Verfahren zeichnet sich dadurch aus, dass keine neuen Trassen erforderlich sind und eine Minimierung des Öffnens von Geländeoberflächen erzielt wird. Das zerfräste, zerspante oder zerschälte Kunststoffmaterial kann entsprechend entsorgt und dem Wirtschaftskreislauf zugeführt werden.

In besonders vorteilhafter Ausgestaltung des Werkzeuges besteht dieses aus einem Kegelstumpffräser oder Kegelstumpfschäler, der als konischer Zylinderkegel ausgebildet ist. Der Kegelstumpf ist an seiner vorderen Zugseite, die den kleineren Durchmesser aufweist, mit einem Innengewinde versehen, in welches das freie Ende des Bohrgestänges eingeschraubt wird. Auf der rückwärtigen Seite des Kegelstumpfes ist ein durchschlägiger Gewindestutzen vorhanden, auf den eine Verschlusskappe oder ein Drallfänger aufgeschraubt werden kann. Durch die zylindrische Form des Kegelstumpfes wird durch den Zug der Hydraulik eine gute Führung und auch eine gewisse Abdichtung im bzw. am Ende des zu entfernenden Kunststoffrohres gewährleistet.

Nach einer ersten Variante des Kegelstumpffräsers ist der Kegelstumpfkörper mit radial angeordneten Bohrungen zu dem in der Rotationsachse liegenden durchgängigen Kanal versehen. In den Bohrungen sind Gewinde eingeschnitten, in die entsprechend den örtlichen Anforderungen, d. h. Material und Bodenverhältnisse, die erforderlichen Zubehörteile eingeschraubt werden. Diese Zubehörteile sind Verschlussschrauben, Einschraubdüsen und Hartmetallfräser. Diese Hartmetallfräser auf dem Kegelfräser dienen dazu, das Kunststoffrohr durch die Rotation und die Zugkraft des Hydraulikaggregates zu zerfräsen bzw. zu zerspanen. Durch die Einschraubdüsen wird das erforderliche Spül-/ Kühlmittel gedrückt.

Nach einer weiteren Variante des Kegelstumpffräsers als Kegelstumpfschäler werden an dem zuvor beschriebenen Kegelstumpfkörper Taschen mit Anlageflächen am Kegelstumpfkörper ausgefräst oder eingeformt. In bzw. an den Anlageflächen der Taschen werden Sackgewinde eingeschnitten, um dort Hartmetalischneidplatten anzuschrauben. Mit der Rotation und der Zugkraft durch das Hydraulikaggregat wird mit den Hartmetallschneidplatten das Kunststoffrohr zerspant bzw. zerschält. Auch ist der Kegelstumpfkörper in bestimmten Bereichen mit radial angeordneten Bohrungen zu dem in der Rotationsachse liegenden durchgängigen Kanal versehen. In den Bohrungen sind Gewinde eingeschnitten, in die entsprechend den örtlichen Anforderungen, d. h. Material und Bodenverhältnisse, die erforderlichen Zubehörteile eingeschraubt werden. Diese Zubehörteile sind Verschlussschrauben und Einschraubdüsen. Durch die Einschraubdüsen wird dann das erforderliche Spül-/Kühlmittel gedrückt.

Der Kegelstumpffräser oder Kegelstumpfschäler wird über ein Hydraulikaggregat oder ein Horizontalbohrgerät angetrieben. Zur Kühlung beim Zerfräsen, Zerspanen oder Zerschälen wird durch die Hochdruckpumpe ein zulässiges Spül-/Kühlmittel über das Bohrgestänge und die Einschraubdüsen in den Arbeitsbereich gedrückt. Gleichzeitig dient dieses Spül-/Kühlmittel dazu, die Fräs-, Span- oder Schälteilchen über das noch vorhandene Restrohr längs des Bohrgestänges Richtung Hydraulikaggregat bzw. Startgrube auszuspülen bzw. auszutragen. Im Bereich des Hydraulikaggregates, d. h. in der Startgrube, wird das Spül-/Kühlmittel mit den darin befindlichen Kunststoffteilchen mittels einer Vakuumpumpe abgesaugt. In einem Recyclingtrennungsverfahren werden dann die Kunststoffteilchen von dem Spül-/Kühlmittel separiert, entsprechend entsorgt und der Weiterverarbeitung bzw. dem Wirtschaftskreislauf zugeführt.

An der rückwärtigen Stirnflächenseite des Kegelstumpfkörpers kann auf den durchschlägigen Gewindestutzen eine Verschlusskappe oder ein Drallfänger aufgeschraubt werden, damit dort kein Spül-/Kühlmittel austreten kann. Über einen Drallfänger, der mit einem Innengewinde, passend zum Gewindestutzen des Kegelstumpffräsers oder Kegelstumpfschälers versehen ist, kann ein neues Rohr oder eine neue Leitung befestigt werden. Sollte es gewünscht sein für das vorhandene zu erneuernde Rohr ein Rohr mit größerem Durchmesser einzuziehen, kann zwischen dem Kegelstumpffräser oder Kegelstumpfschäler und dem Drallfänger noch ein Aufweitekopf montiert werden.

Bei der erfindungsmäßigen Vorrichtung ergeben sich somit folgende Vorteile, die darin zu sehen sind, dass eine komplette Entfernung des vorhandenen Kunststoffrohres aus dem Erdreich und Rückführung in den Wirtschaftskreislauf erfolgen kann. Es müssen keine neuen Trassen, angesichts der wenigen Ressourcen, gerade in innerstädtischen Bereichen, erstellt oder gesucht werden. Daraus ergibt sich eine absolute Kostenoptimierung durch die Minimierung des Öffnens von vor allem hochwertigen Oberflächen.

Gemäß der Erfindung wird hierzu merkmalsgemäß vorgeschlagen, dass die mit einem Hydraulikaggregat ausgestatte Bohrvorrichtung für das verlängerbare Rohrgestänge in der Startgrube aufgestellt wird, ersatzweise könnte auch ein Horizontalbohrgerät auf Lafette im Startgrubenbereich aufgestellt werden. Das Rohrgestänge wird durch das zu entfernende Kunststoffrohr bis in die Zielgrube eingefahren bzw. eingeschoben. In der Zielgrube wird an das freie Ende des Rohrgestänges ein Werkzeug montiert, welches unter Rotation des Rohrgestänges und Einfahren bzw. Zurückziehen des Rohrgestänges in Richtung zur Startgrube das Rohr im Erdreich zerfräst, zerspant oder zerschält.

In vorteilhafter Ausgestaltung wird hiermit beim Zerfräsen, Zerspanen oder Zerschälen durch das Rohrgestänge Spül-/Kühlmittel gepumpt. Das Spül-/Kühlmittel tritt hierbei über das Werkzeug aus und wird durch das vorhandene Kunststoffrohr mit den Kunststoffteilchen längs des Bohrgestänges zur Startgrube zurückgeleitet. Nach einer besonders vorteilhaften Ausgestaltung der Erfindung wird als Werkzeug ein Kegelstumpf verwendet, an dessen Kegelstumpfmantel Hartmetalleinlagen angeordnet sind. Nach einer anderen Ausführungsform der Erfindung können auch an dem Kegelstumpfmantel Taschen mit Anlageflächen vorhanden sein, in denen Hartmetallschneidplatten radial liegend oder stehend angeordnet sind.

In der Weiterbildung ist der Kegelstumpf über seinen Umfang verteilt mit Gewindeöffnungen zur Aufnahme von Spüldüsen durchsetzt, durch die beim Zerfräsungs-, Zerspanungs- oder Zerschälungsvorgang das Spül-/Kühlmittel austritt. Nach einer besonders vorteilhaften Ausgestaltung kann auf das freie Ende des Kegelstumpfes auf den Gewindestumpf eine Verschlusskappe oder ein Drallfänger montiert werden. Mittels des Drallfängers kann ein neues Rohr oder eine neue Leitung von der Zielgrube her eingezogen werden.

Die Erfindung betrifft in gleicher Weise auch eine Vorrichtung zum Entfernen eines im Erdreich verlegten Kunststoffrohres, wie beispielsweise ein Gas-, Wasser-, Abwasserrohr oder dergleichen, welches z. B. aus PVC, PE, PET Material besteht, umfassend eine Bohrvorrichtung mit einem rotierenden Bohrgestänge, welches in einer Startgrube angeordnet ist, ersatzweise wäre auch ein Horizontalbohrgerät auf Lafette möglich. Die Vorrichtung zeichnet sich hierbei dadurch aus, dass an das freie Ende des Bohrgestänges in einer Zielgrube ein kegelstumpfartiges Werkzeug festlegbar ist, welches durch Rotation und Zug den Kunststoffmantel des Rohres zerfräst, zerspant oder zerschält. Der Kegelstumpf weist hierbei an seinem Kegelstumpfmantel Hartmetalleinlagen auf. Nach einer weiteren Ausgestaltung sind an dem Kegelstumpfkörper Taschen mit Anlageflächen vorgesehen, in denen Hartmetallschneidplatten befestigt sind. Die Hartmetallschneidplatten stehen hier radial ab, sodass sich diese aufgrund der Konizität in das Rohrmaterial einschneiden und dieses zerschälen. Wie bereits beschrieben, ist der Kegelstumpf über seinen Umfang verteilt mit Gewindeöffnungen zum Einschrauben von Spüldüsen durchsetzt. An das freie Ende des Kegelstumpfes kann eine Verschlusskappe oder ein Drallfänger montiert werden. Über den Drallfänger kann eine neue Leitung von der Zielgrube her eingezogen werden.

Es besteht auch die Möglichkeit bei dem System, dass mehrere Kegelstümpfe in Serie aneinander montiert werden können, um eine deutliche Erhöhung der Durchströmung des Spül-/Kühlmittels zu erreichen, hiermit werden die Kunststoffteilchen schneller und besser transportiert und ausgetragen.

Die Erfindung betrifft ebenfalls das Werkzeug zum Entfernen eines im Erdreich verlegten Kunststoffrohres, wie beispielsweise ein Gas-, ein Wasser- oder Abwasserrohr, welches z. B. aus PVC, PE, PET Material besteht, welches mit einer Bohrvorrichtung mit einem rotierenden Bohrgestänge zusammenwirkt, das in einer Startgrube angeordnet ist. Das Werkzeug umfasst einen Kegelstumpf, der an das freie Ende des Bohrgestänges in einer Zielgrube montiert wird, wobei der Kegelstumpf durch Zug und Rotation des Bohrgestänges den Kunststoffmantel des Rohres zerfräst, zerspant bzw. zerschält wird. Hierzu weist der Kegelstumpf an seinem Kegelstumpfmantel Hartmetalleinlagen auf. In dem Kegelstumpfmantel können auch Taschen mit Schneidplatten angeordnet sein. Über den Umfang des Kegelstumpfkörpers sind Spülungsöffnungen bzw. Kanäle vorgesehen, die mit dem Bohrgestängekanal in der Rotationsachse in Verbindung stehen.

Nach einer besonders vorteilhaften Ausgestaltung des Kegelstumpfkörpers verfügt dieser über Ausnehmungen am Kegelstumpfmantel, in denen geformte Segmentplatten mit einer Diamantbeschichtung mittels einer Verschraubung festlegbar sind. Die Segmentplatten erstrecken sich hierbei über die Mantelfläche des Kegelstumpfkörpers, so dass sich für den Schäl- und Zerspanungsvorgang, der sich im Wesentlichen an der Rohrinnenwand einstellt, ein entsprechend unter einem Winkel verlaufenden Schäl- bzw. Zerspanungsflächenring bildet, der eine stabile Ausrichtung und Führung für den rotierenden Kegelstumpfkörper bereitstellt.

Hierbei sind am Kegelstumpfmantel die Ausnehmungen sowie die geformten Segmentplatten mit Diamantbeschichtung unter einer geformten Verdrehung über die Mantelfläche des Kegelstumpfes angeordnet. Durch die geformte Verdrehung des Kegelstumpfkörpers vom vorderen Anschlussbereich zum hinteren Endbereich ergibt sich eine Art Viertel-Gewinde-Form, welche den Schäl- und Fräsvorgang begünstigt, da die Mantelfläche sich schraubenartig am Zerspanungsflächenring im Rohr bewegt.

In Weiterbildung umfasst die einzelne Ausnehmung einen stufenartigen Rand, auf dem die geformte Segmentplatte im montierten Zustand aufliegt.
Durch die Ausbildung einer stufenartigen Auflage in der Ausnehmung ergibt sich zwischen dem Boden der Ausnehmung und der Rückseite der geformten montierten Segmentplatte ein spaltförmiger flacher Hohlraum, der zur Aufnahme für die in den Kegelstumpfkörper gepumpte Spülung vorgesehen ist. Die Spülung tritt zwischen den an den Ausnehmungen montierten geformten Segmentplatten an den längsverlaufenden Spalten aus, die zwischen den Längsseiten der montierten Segmentplatten verlaufen. Für den Zufluss der Spülflüssigkeit in die Spalträume der längsverlaufenden Spalte sind am Kegelstupfkorpus eingeformte Spülschlitze im Kegelstumpfkorpus vorgesehen, die die Verbindung mit den Hohlräumen herstellen. Der Kegelstumpfkorpus ist hierbei über seinen Umfang verteilt mit Spülungskanälen durchsetzt, die sich zwischen einem in der Rotationachse verlaufenden Spülkanal und den Ausnehmungen erstrecken. Der Kegelstumpf weist in der Rotationsachse eine Gewindeaufnahme für ein Adapterstück auf, an dem das Bohrgestänge angeschlossen wird. Somit ergibt sich, dass die Spülflüssigkeit vom Bohrgestänge über den Adapter in die Spülkanäle und dann in die Hohlräume gelangt, von wo sie dann über die eingeformten Spülschlitze in die Spalten gelangt, damit sich die Spülflüssigkeit auf der Mantelfläche verteilt, von wo sie mit dem anfallenden Span in das Rohr zurückströmt.

An das freie Ende des Kegelstumpfes ist ein Drallfänger montierbar, mittels dem ein neues Rohr von der Zielgrube her eingezogen werden kann.

### Beschreibung der Zeichnungen

Ein Ausführungsbeispiel der Erfindung ist in den Zeichnungen rein schematisch dargestellt und wird nachfolgend näher beschrieben. Es zeigt
- Figur 1: eine Seitenansicht des erfindungsgemäßen Verfahrens;
- Figur 2: eine Seitenansicht eines Kegelstumpffräsers gemäß einer ersten Ausführungsform;
- Figur 3: eine geschnittene Stirnansicht des Kegelstumpffräsers gemäß der Figur 2, mit radial angeordneten Spülkanälen;
- Figur 4: eine weitere Seitenansicht eines kegelstumpfartigen Werkzeugs gemäß einer weiteren Ausführungsform;
- Figur 5: eine Stirnansicht des kegelstumpfartigen Werkzeuges gemäß der Figur 4, mit eingebundenen Schneidplatten;
- Figur 6: eine Darstellung von mehreren Werkzeugen in der Serienanordnung mit einem endseitig angeordneten Drallfänger;
- Figur 7: eine seitliche Darstellung einer weiteren Ausführungsform eines Werkzeugs gemäß der Erfindung,
- Figur 8: eine Draufsicht auf das Werkzeug gemäß der Figur 7
- Figur 9: eine geschnittene Seitenansicht gemäß der Schnittlinie A - A in der Figur 8;
- Figur 10: eine geschnittene Draufsicht gemäß der Schnittlinie B - B in der Figur 7;
- Figur 11: eine Seitenansicht des Kegelstupfkörpers ohne Segmentplatten und
- Figur 12: eine weitere Seitenansicht des erfindungsgemäßen Werkzeugs in einem Rohr.

### Ausführungsbeispiele

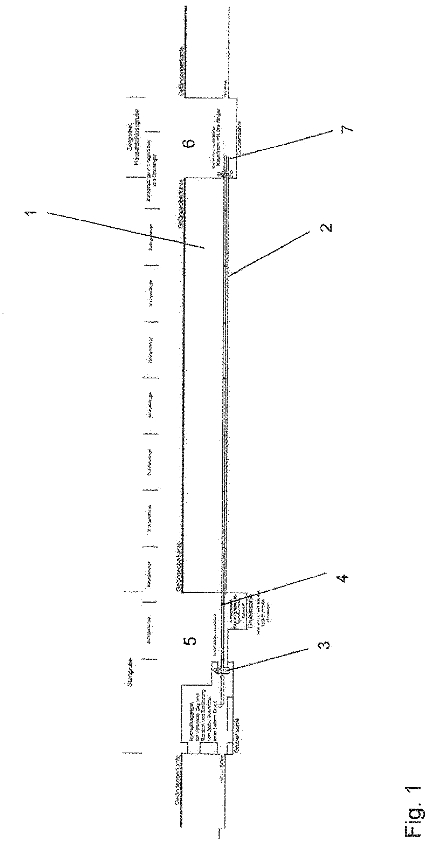

Die Figur 1 zeigt in der geschnittenen Seitenansicht das Verfahren gemäß der Erfindung zum Entfernen eines im Erdreich 1 verlegten Kunststoffrohres 2. Das Kunststoffrohr 2 kann hierbei ein Gas-, ein Wasser- oder ein Abwasserrohr sein, welches z. B. aus PVC, PE, PET Material gefertigt ist. Das Verfahren umfasst hierbei eine Bohrvorrichtung 3 und ein rotierendes Bohrgestänge 4, welches von einer Startgrube 5 am Anfang zu einer Zielgrube 6 am Ende durch das zu entfernende Kunststoffrohr 2 eingeschoben wird. Hierzu wird zunächst das zu entfernende Kunststoffrohr 2 in der Startgrube 5 und in der Zielgrube 6 jeweils aufgetrennt, bevor in der Startgrube 5 die mit einem Hydraulikaggregat ausgestattete Bohrvorrichtung 3 für das verlängerbare Bohrgestänge 4 in der Startgrube 5 aufgestellt wird. Das Bohrgestänge 4 wird dann mit der Bohrvorrichtung 3 durch das zu entfernende Kunststoffrohr 2 bis in die Zielgrube 6 eingefahren bzw. geschoben, wie dies in der geschnittenen Darstellung der Figur 1 dargestellt ist.

Dann wird an das freie Ende 7 des Bohrgestänges 4 in der Zielgrube 6 ein Werkzeug 8 angesetzt, weiches unter Rotation des Bohrgestänges 4 und Einfahren bzw. Zurückziehen des Bohrgestänges 4 in Richtung zur Startgrube 5 das Kunststoffrohr 2 im Erdreich zerfräst bzw. zerspant. Hierbei wird beim Zerfräsen oder Zerspanen durch das Bohrgestänge 4 ein Spül-/Kühlmittel gepumpt. Das Spül-/Kühlmittel tritt hierbei über das Werkzeug 8 aus und fließt durch das zu entfernende Kunststoffrohr 2 mit den Kunststoffspänen in die Startgrube 5 zurück.

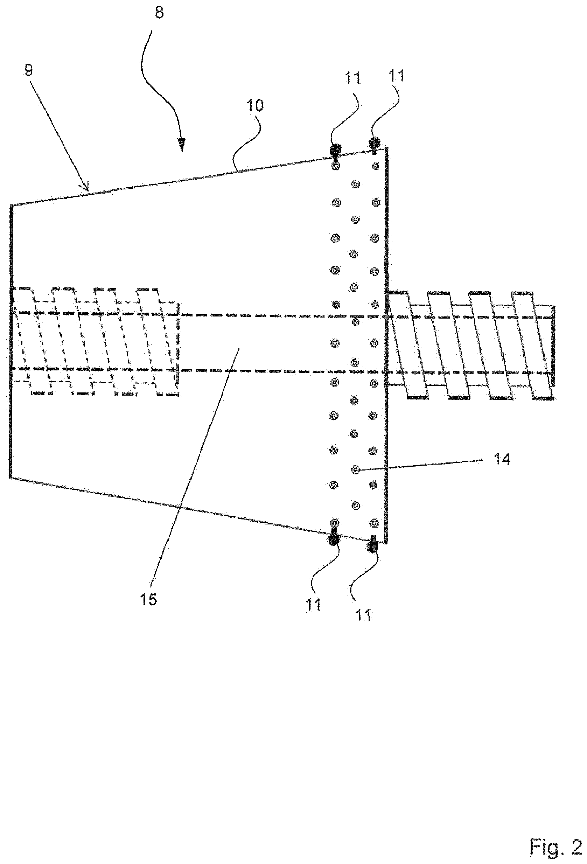

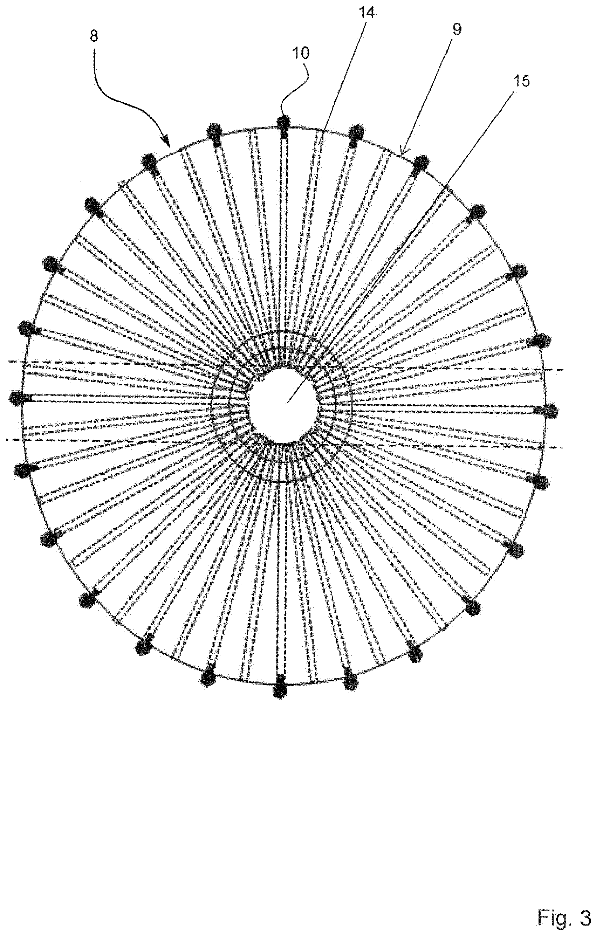

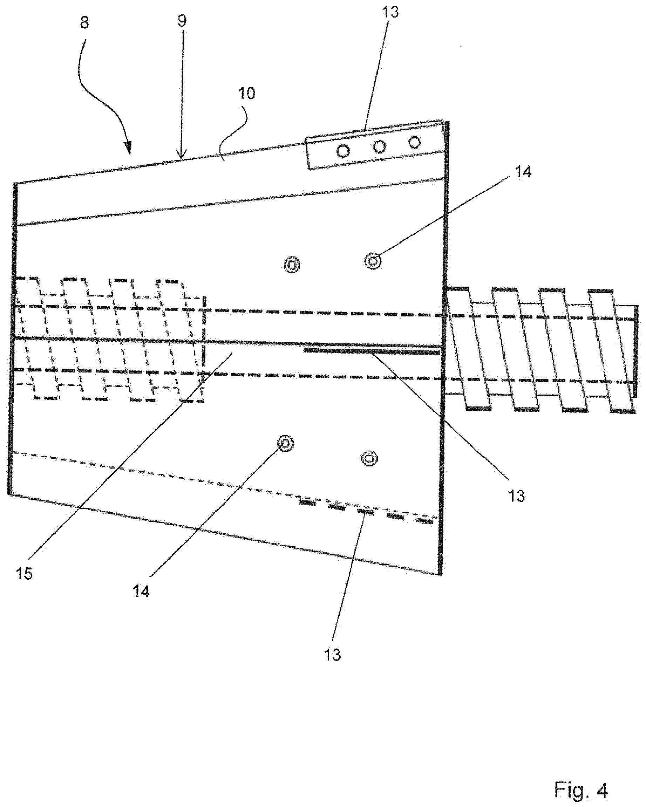

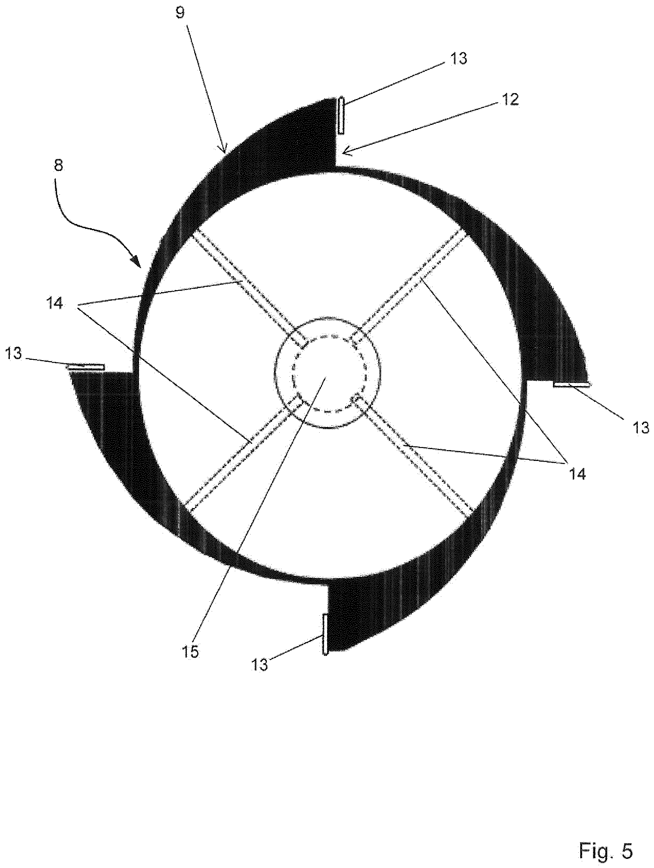

Das Werkzeug 8 als solches stellt sich hierbei als Kegelstumpffräser 9 oder Kegelstumpfschäler 9 dar, wie dieser in der Figur 2 und 4 näher dargestellt ist. Am Kegelstumpfmantel 10 sind Hartmetalleinlagen 11 angeordnet, die sich über den Umfang hin erstrecken, wobei die Hartmetalleinlagen 11 im gezeigten Beispiel in Bohrungen oder auch Sacklöchern eingebracht werden können. Gemäß der Figur 4 wird eine weitere Ausführungsform gezeigt, wobei an dem Kegelstumpfmantel 10 Taschen 12 vorgesehen sind, in denen Hartmetallschneidplatten 13 eingebettet sind. Die Schneidplatten 13 sind hierbei an Anlageflächen in der Tasche 12 befestigt und stehen radial ab, wobei in der Figur 5 vier Schneidplatten 13 gezeigt sind, die sich radial über den Umfang des Kegelstumpfmantels 10 erstrecken. Über den Umfang des Kegelstumpfmantels 10 erstrecken sich Spülungsöffnungen bzw. Kanäle 14, wie diese in der Figur 3, aber auch in der Figur 4 näher dargestellt sind. Auch in der Figur 5 sind Spülungskanäle 14 erkennbar, die sich radial vom Bohrgestängekanal 15 in der Rotationsachse aus erstrecken.

Gemäß der Ausführungsform der Figur 2 sind die Spülungskanäle 14 radial derart angeordnet, dass sie jeweils immer eine Zwischenlage zwischen den Hartmetalleinlagen 11 aufweisen, sodass entsprechend zugeordnet zu jeder Hartmetalleinlage 11 Spül-/Kühlmittel austreten kann. Entsprechendes ist auch gemäß der Ausführungsform der Figur 5 zu erkennen, wo jeder Schneidplatte 13 jeweils ein Spülungskanal 14 zugeordnet ist.

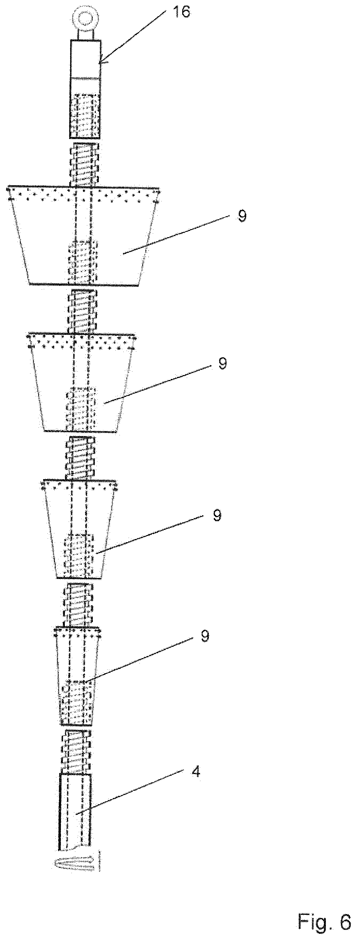

Wie insbesondere aus der Figur 6 in der Seitenansicht zu erkennen ist, kann an das freie Ende 7 des Kegelstumpffräsers 9 ein Drallfänger 16 montiert werden, mittels dem ein nicht näher dargestelltes neues Rohr von der Zielgrube 6 aus eingezogen werden kann. Um eine verbesserte Durchspülung im zu entfernenden Kunststoffrohr 2 bereitzustellen, können mehrere Kegelstumpffräser 9 in Serie aneinander montiert werden, wie dies ebenfalls in der Figur 6 dargestellt ist.

Die Erfindung betrifft in gleicher Weise auch die Vorrichtung und das Werkzeug 8 zum Entfernen eines im Erdreich 1 verlegten Kunststoffrohres 2, wie beispielsweise ein Gasrohr oder ein Wasserrohr, welches z. B. aus PVC, PE, PET Material besteht. Die Vorrichtung umfasst hierbei eine Bohrvorrichtung 3 mit einem rotierenden Bohrgestänge 4, welches in einer Startgrube 5 angeordnet ist. Wie insbesondere aus der Figur 1 erkennbar ist, ist an das freie Ende 7 des Bohrgestänges 4 in der Zielgrube 6 ein kegelstumpfartiges Werkzeug 8 festlegbar, welches durch Zug und Rotation den Kunststoffmantel des Rohres 2 zerfräst, zerspant bzw. zerschält.

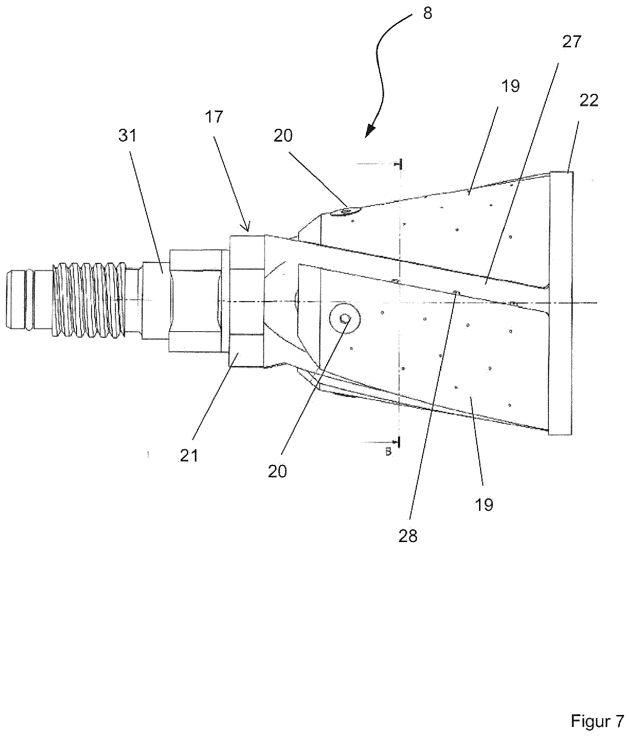

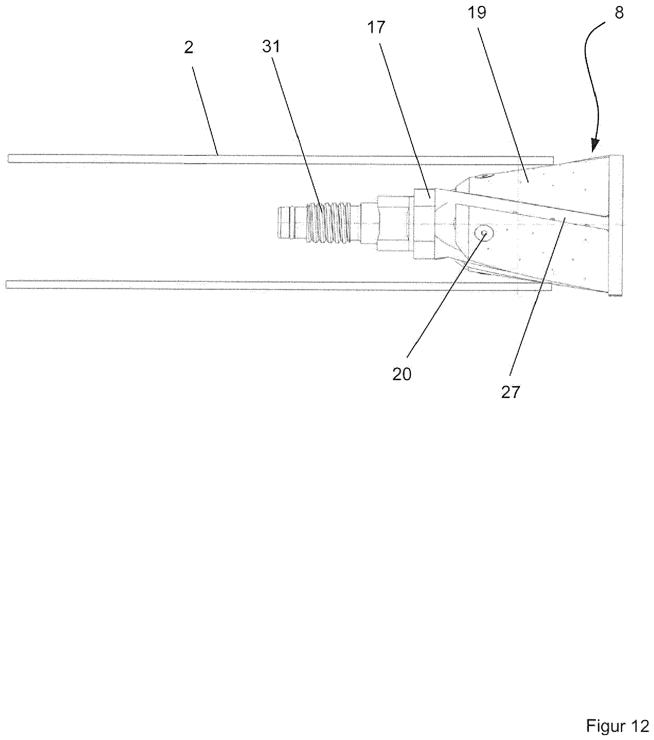

Die Figuren 7, 8, 9 und 10 zeigen eine weitere Ausführungsform des erfindungsgemäßen Werkzeugs 8 zur Durchführung des Verfahrens. Nach einer besonders vorteilhaften Ausgestaltung des Kegelstumpfkörpers 17 verfügt dieser über Ausnehmungen 18 am Kegelstumpfmantel 10. In den Ausnehmungen 18 sind geformte Segmentplatten 19 mit einer Diamantbeschichtung mittels einer Verschraubung 20 festgelegt. Die Segmentplatten 19 erstrecken sich hierbei über die Mantelfläche 23 des Kegelstumpfkörpers 17, so dass sich für den Schäl- und Zerspanungsvorgang, der sich im Wesentlichen an der Rohrinnenwand einstellt, ein entsprechend unter einem Winkel verlaufender Schäl- bzw. Zerspanungsflächenring bildet, der eine stabile Ausrichtung und Führung für den rotierenden Kegelstumpfkörper 17 bereitstellt, wie dies angedeutet in der Figur 12 erkennbar ist.

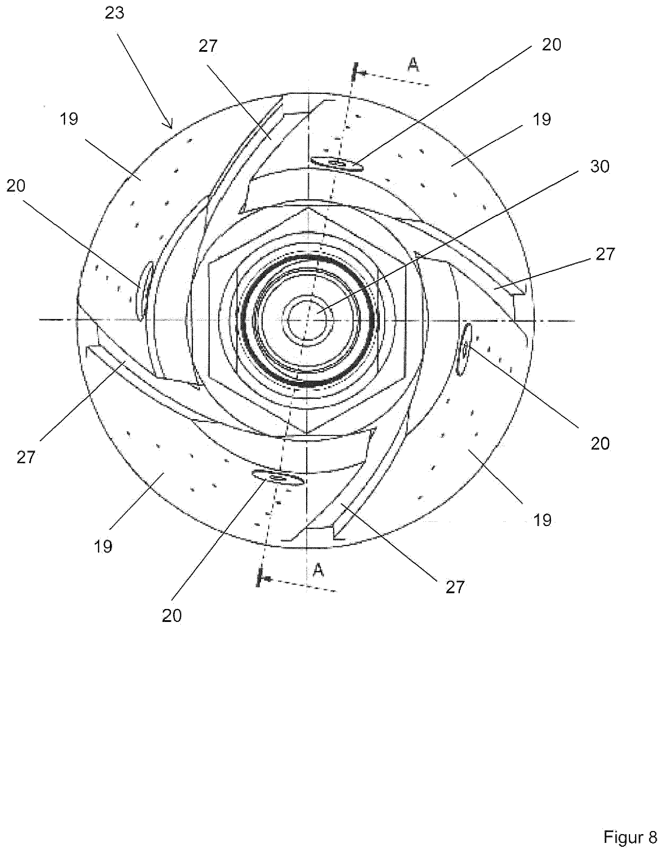

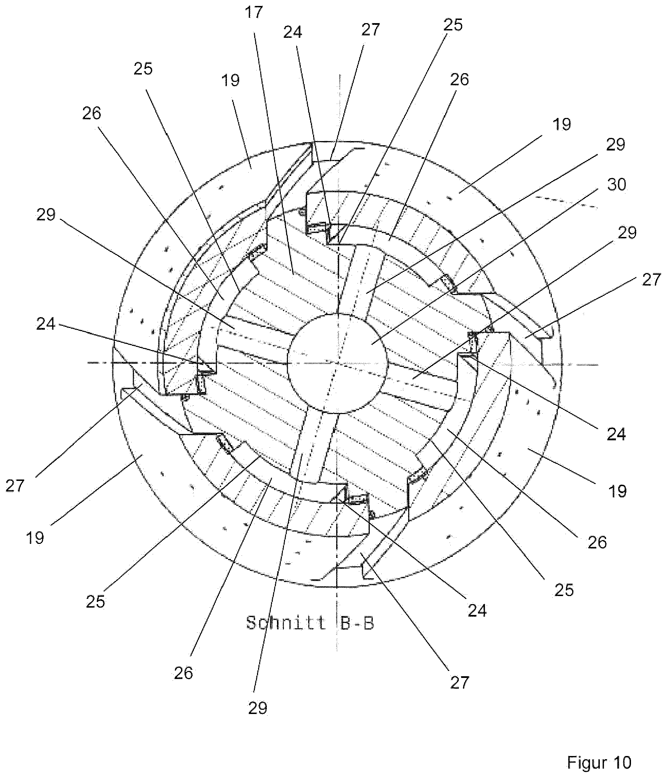

Hierbei sind am Kegelstumpfmantel 10 die Ausnehmungen 18 sowie die geformten Segmentplatten 19 mit Diamantbeschichtung unter einer geformten Verdrehung über die Mantelfläche des Kegelstumpfes angeordnet, wie dies aus der Figur 8 und 10 in der Draufsicht deutlich wird. Durch die geformte Verdrehung des Kegelstumpfkörpers 17 vom vorderen Anschlussbereich zum hinteren Endbereich ergibt sich eine Art Viertel-Gewinde-Form, welche den Schäl- und Fräsvorgang begünstigt, da die Mantelfläche 23 sich schraubenartig am Zerspanungsflächenring im Rohr 2 bewegt.

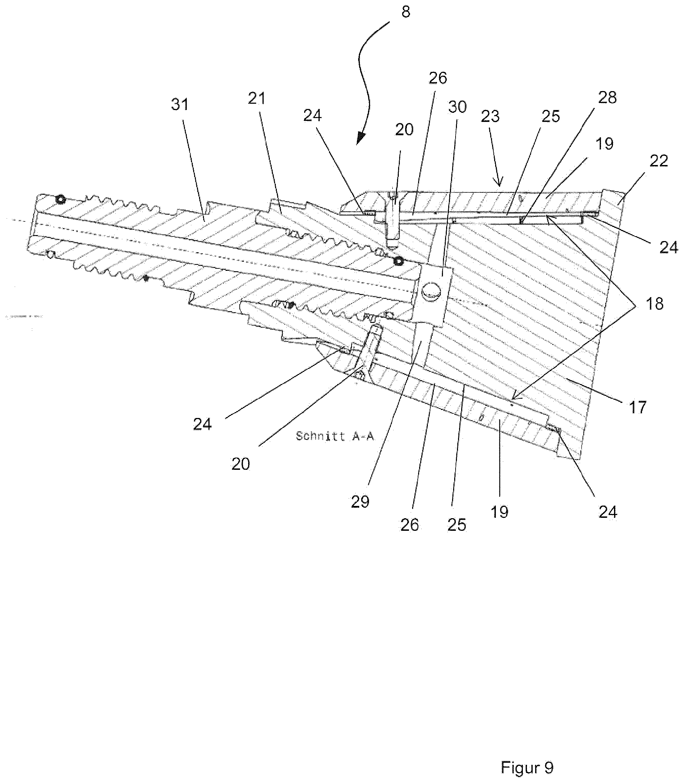

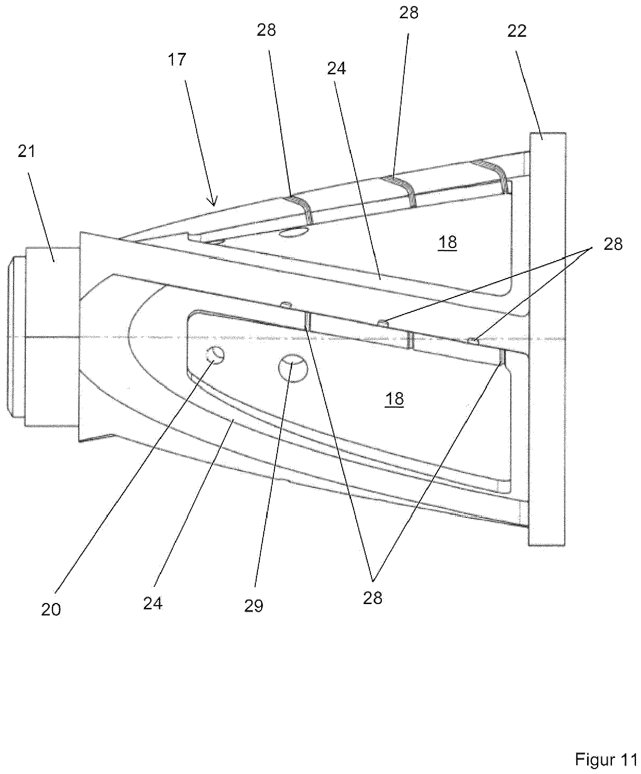

In Weiterbildung umfasst hierbei die einzelne Ausnehmung 18 einen stufenartigen Rand 24, auf dem die geformte Segmentplatte 19 im montierten Zustand aufliegt, wie dies aus den geschnittenen Darstellungen der Figuren 9 und 10 ersichtlich ist. Durch die Ausbildung der stufenartigen Auflage in der Ausnehmung 18 ergibt sich zwischen dem Boden 25 der Ausnehmung 18 und der Rückseite der geformten montierten Segmentplatte 19 ein spaltförmiger flacher Hohlraum 26, der zur Aufnahme für die in den Kegelstumpfkörper 17 gepumpte Spülung vorgesehen ist. Die Spülung tritt zwischen den an den Ausnehmungen 18 montierten geformten Segmentplatten 19 an den längsverlaufenden Spalträumen 27 aus, die zwischen den Längsseiten der montierten Segmentplatten 19 verlaufen. Für den Zufluss der Spülflüssigkeit in die Spalträume 27 sind am Kegelstumpfkorpus 17 eingeformte Spülschlitze 28 im Kegelstumpfkorpus 17 vorgesehen, die die Verbindung mit den Hohlräumen 26 herstellen. Die Spülschlitze 28 sowie die Ausnehmung 18 am Kegelstumpfköper 17 sind insbesondere in der Figur 11 näher und besser zu erkennen, wo insbesondere der Kegelstumpfkörper 17 ohne die montierten Segmentplatten 19 dargestellt ist.

Der Kegelstumpfkorpus 17 ist hierbei über seinen Umfang verteilt mit Spülungskanälen 29 durchsetzt, die sich zwischen einem in der Rotationachse verlaufenden Spülkanal 30 und den Ausnehmungen 18 erstrecken. Der Kegelstumpfkörper 17 weist in der Rotationsachse eine Gewindeaufnahme für ein Adapterstück 31 auf, an dem das Bohrgestänge 4 angeschlossen wird. Somit ergibt sich, dass die Spülflüssigkeit vom Bohrgestänge 4 über den Adapter 31 in die Spülkanäle 29 und dann in die Hohlräume 26 gelangt, von wo sie dann über die eingeformten Spülschlitze 28 in die Spalträume 27 gelangt, damit sich die Spülflüssigkeit auf der Mantelfläche 23 verteilt, von wo sie mit dem anfallenden Span in das verbleibende Rohr 2 erkennbar in der Figur 12 zurückströmt.

### Bezugszeichenliste

- 01: Erdreich
- 02: Kunststoffrohr
- 03: Bohrvorrichtung
- 04: Bohrgestänge
- 05: Startgrube
- 06: Zielgrube
- 07: Freies Ende Bohrgestänge
- 08: Werkzeug
- 09: Kegelstumpffräser
- 10: Kegelstumpfmantel
- 11: Hartmetalleinlage
- 12: Taschen
- 13: Schneidplatten
- 14: Kanäle
- 15: Bohrgestängekanal
- 16: Drallfänger
- 17: Kegelstumpfkörper
- 18: Ausnehmungen
- 19: Segmentplatten
- 20: Verschraubung
- 21: Vorderer Anschlussbereich
- 22: Hinterer Endbereich
- 23: Mantelfläche
- 24: Stufenartiger Rand
- 25: Boden Ausnehmung
- 26: Hohlraum
- 27: Spalträume
- 28: Spülschlitze
- 29: Spülkanäle
- 30: Spülkanal Rotationsachse
- 31: Adapterstück

## Patentansprüche

1. Verfahren zum Entfernen eines im Erdreich (1) verlegten Kunststoffrohres (2), wie ein Gas-, ein Wasser-, ein Abwasserrohr oder dergleichen, welches z. B. aus PVC, PE, PET Material besteht, mit einer Bohrvorrichtung (3) und einem rotierenden Bohrgestänge (4), wobei zunächst eine Startgrube (5) am Anfang und eine Zielgrube (6) am Ende der zu entfernenden Rohrlänge ausgehoben wird, und wobei dann das zu entfernende Kunststoffrohr (2) in der Startgrube (5) und in der Zielgrube (6) aufgetrennt wird,
**gekennzeichnet dadurch,**
**dass** die mit einem Hydraulikaggregat ausgestattete Bohrvorrichtung (3) für das verlängerbare Bohrgestänge (4) in und im Bereich der Startgrube (5) aufgestellt wird, und das Bohrgestänge (4) durch das zu entfernende Kunststoffrohr (2) bis in die Zielgrube (6) eingefahren bzw. geschoben wird, und wobei dann an das freie Ende (7) des Bohrgestänges (4) in der Zielgrube (6) ein Werkzeug (8) angesetzt wird, welches unter Rotation des Bohrgestänges (4) und Einfahren bzw. Zurückziehen des Bohrgestänges (4) in Richtung zur Startgrube (5) das Kunststoffrohr (2) im Erdreich zerfräst, zerspant oder zerschält.

2. Verfahren nach Anspruch 1,
**dadurch gekennzeichnet,**
**dass** beim Zerfräsen, Zerspanen oder Zerschälen durch das Bohrgestänge (4) eine Spül-/Kühlmittel gepumpt wird.

3. Verfahren nach Anspruch 1 und 2,
**dadurch gekennzeichnet,**
**dass** die Spül-/Kühlmittel über das Werkzeug (8) austritt und durch das zu entfernende Kunststoffrohr (2) mit den Kunststoffspänen, -teilchen in die Startgrube (5) zurückfließt.

4. Verfahren nach den Ansprüchen 1 bis 3,
**dadurch gekennzeichnet,**
**dass** als Werkzeug (8) ein Kegelstumpffräser (9) verwendet wird, an dessen Kegelstumpfmantel (10) Hartmetalleinlagen (11) angeordnet sind.

5. Verfahren nach den Ansprüchen 1 bis 4,
**dadurch gekennzeichnet,**
**dass** an dem Kegelstumpfmantel (10) in Taschen (12) liegende Schneidplatten (13) oder geformte Segmentplatten mit einer Diamantbeschichtung angeordnet sind.

6. Verfahren nach den Ansprüchen 1 bis 5,
**dadurch gekennzeichnet,**
**dass** der Kegelstumpfkörper über seinen Umfang verteilt mit Spülungsöffnungen bzw. Kanälen (14) durchsetzt ist.

7. Verfahren nach Anspruch 1 bis 6,
**dadurch gekennzeichnet,**
**dass** an das freie Ende (7) des Kegelstumpffräsers (9) ein Drallfänger (16) montierbar ist, mittels dem ein neues Rohr von der Zielgrube (6) her eingezogen wird.

8. Werkzeug zur Durchführung des Verfahrens zum Entfernen eines im Erdreich (1) verlegten Kunststoffrohres (2), wie beispielsweise ein Gas-, ein Wasser- oder Abwasserrohr, welches z. B. aus PVC, PE, PET Material besteht, welches mit einer Bohrvorrichtung (3) mit einem rotierenden Bohrgestänge (4) zusammenwirkt, die in einer Startgrube (5) angeordnet ist,
**dadurch gekennzeichnet,**
**dass** das Werkzeug (8) einen Kegelstumpf umfasst, der an das freie Ende (7) des Bohrgestänges (4) in einer Zielgrube (6) festlegbar ist, wobei der Kegelstumpf durch Zug und Rotation des Bohrgestänges (4) den Kunststoffmantel des Rohres (2) zerfräst, zerspant bzw. zerschält.

9. Werkzeug nach Anspruch 8,
**dadurch gekennzeichnet,**
**dass** der Kegelstumpf an seinem Kegelstumpfmantel (10) Hartmetalleinlagen (11) aufweist.

10. Werkzeug nach Anspruch 8 und 9,
**dadurch gekennzeichnet,**
**dass** in dem Kegelstumpfmantel (10) in Taschen (12) liegende Schneidplatten (13) angeordnet sind.

11. Werkzeug nach den Ansprüchen 8 bis 10,
**dadurch gekennzeichnet,**
**dass** am Kegelstumpfmantel (10) Ausnehmungen (18) vorgesehen sind, in denen geformte Segmentplatten (19) mit einer Diamantbeschichtung mittels einer Verschraubung (20) festlegbar sind.

12. Werkzeug nach den Ansprüchen 8 bis 11,
**dadurch gekennzeichnet,**
**dass** am Kegelstumpfmantel (10) die Ausnehmungen (18) sowie die geformten Segmentplatten (19) mit Diamantbeschichtung unter einer geformten Verdrehung über die Mantelfläche (23) des Kegelstumpfes angeordnet sind.

13. Werkzeug nach den Ansprüchen 8 bis 12,
**dadurch gekennzeichnet,**
**dass** die einzelne Ausnehmung (18) einen stufenartigen Rand (24) umfasst, auf dem die geformte Segmentplatte (19) im montierten Zustand aufliegt.

14. Werkzeug nach den Ansprüchen 8 bis 13,
**dadurch gekennzeichnet,**
**dass** zwischen dem Boden (25) der Ausnehmung (18) und der Rückseite der geformten montierten Segmentplatte (19) ein spaltförmiger Hohlraum (26) für die Spülung vorgesehen ist.

15. Werkzeug nach den Ansprüchen 8 bis 14,
**dadurch gekennzeichnet,**
**dass** zwischen den an den Ausnehmungen (18) montierten geformten Segmentplatten (19) längsverlaufende Spalträume (27) für die Spülung vorgesehen sind.

16. Werkzeug nach den Ansprüchen 8 bis 15,
**dadurch gekennzeichnet,**
**dass** die längsverlaufenden Spalträume (27) über eingeformte Spülschlitze (28) am Kegelstumpfkorpus (17) mit den Hohlräumen (26) verbunden sind.

17. Werkzeug nach den Ansprüchen 8 bis 16,
**dadurch gekennzeichnet,**
**dass** der Kegelstumpfkorpus (17) über seinen Umfang verteilt mit Spülungskanälen (29) durchsetzt ist, die sich zwischen einem in der Rotationachse verlaufenden Spülkanal (30) und den Ausnehmungen (18) erstrecken.

18. Werkzeug nach den Ansprüchen 8 bis 17,
**dadurch gekennzeichnet,**
**dass** der Kegelstumpfkörper (17) in der Rotationsachse eine Gewindeaufnahme für ein Adapterstück (31) aufweist, an dem das Bohrgestänge (4) anschließbar ist.

19. Vorrichtung nach den Ansprüchen 8 bis 18,
**dadurch gekennzeichnet,**
**dass** an das freie Ende (7) des Kegelstumpfkörpers (17) ein Drallfänger (16) montierbar ist, mittels dem ein neues Rohr von der Zielgrube (6) her eingezogen wird.
